# EUROPEAN PATENT SPECIFICATION

(11) **EP 1 393 806 B1**
(45) Date of publication and mention of the grant of the patent: **07.02.2007**
(21) Application number: 03255196.2
(22) Date of filing: 21.08.2003
(51) Int. Cl.: B01J 47/04, B01J 47/02, B01J 47/00

(54) **Method for charging ion exchange resins into condensate demineralizer**
Verfahren zum Packen von kondensaten Entsalzungsvorrichtungen mit Ionenaustauscherharzen
Méthode pour remplir des résines échangeuses d'ions dans un dispositif de déminéralisation de condensat

(30) Priority: 23.08.2002 JP 2002243262; 26.02.2003 JP 2003048754
(43) Date of publication of application: 03.03.2004
(73) Proprietor: Organo Corporation, Tokyo 136-8631 (JP)
(72) Inventor: Ohashi, Shinichi Organo Corporation, Tokyo 136-8631 (JP); Morita, Toshio Organo Corporation, Tokyo 136-8631 (JP); Takahashi, Hidenori Organo Corporation, Tokyo 136-8631 (JP); Saiki, Kazuhiko Organo Corporation, Tokyo 136-8631 (JP)
(74) Representative: Blake, John Henry Francis

(56) References cited:
- WO-A-96/28252
- US-A- 4 349 442
- PATENT ABSTRACTS OF JAPAN vol. 1998, no. 02, 30 January 1998 (1998-01-30) & JP 09 276862 A (JAPAN ORGANO CO LTD), 28 October 1997 (1997-10-28)
- PATENT ABSTRACTS OF JAPAN vol. 2002, no. 05, 3 May 2002 (2002-05-03) & JP 2002 001328 A (JAPAN ORGANO CO LTD), 8 January 2002 (2002-01-08)

## Description

The present invention relates to a method for charging ion exchange resins into a condensate demineralizer provided in a condensate circulation system for a nuclear power plant or a fossil-fueled power plant.

It is known that several kinds of organic impurities are contained in water treated by a condensate demineralizer. These impurities are mainly impurities eluted from ion exchange resins charged in a demineralization vessel, and they are generated, ascribed to the oxidation decomposition of the ion exchange resins caused by dissolved oxygen or/and an oxidant. Among these impurities, an organic impurity eluted from a cation exchange resin is mainly polystyrene sulfonic acid (hereinafter, also referred to as "PSS"), and because this creates a sulfate ion by being decomposed in a reactor or a steam generator, recently it has become a problem. Namely, since sulfuric acid may cause corrosion of structural materials and formation of scale, it is desirable to reduce this acid as much as possible, and some methods for reducing such a sulfate ion are proposed.

As one of the reducing methods, a method is proposed, wherein stratified ion exchange resin beds are formed in a demineralization vessel, that is, the upper bed is formed as a bed of mixed ion exchange resins which is formed by mixing a cation exchange resin and an anion exchange resin, and the lower bed is formed as a bed of a sole anion exchange resin (JP-A-9-276862). In this method, because the anion exchange resin bed at the lower position in the demineralization vessel adsorbs PSS eluted from the upper bed, the PSS concentration in the treated water can be reduced.

In such a case, however, when the stratified two ion exchange resin beds are to be formed in a demineralization vessel as a desired formation, there is the following problem. Namely, because the specific gravity of an anion exchange resin is generally smaller than that of a cation exchange resin, when ion exchange resins are charged into a demineralization vessel, even if the anion exchange resin is charged in advance and a bed of the anion exchange resin is formed at a lower position in the vessel, the resin bed in the vessel becomes a fluidized state when the mixed ion exchange resins are charged into the vessel, as a part of the anion exchange resin forming the lower bed flows up and moves up to an upper portion of the mixed ion exchange resin bed, and the amount of the anion exchange resin remaining at the lower position in the vessel may decrease. If the amount of the anion exchange resin at the lower position in the demineralization vessel decreases, PSS is hard to be trapped, the PSS concentration in the treated water increases, and an aimed effect for reducing the PSS concentration in the treated water due to the separation into the two beds may not be obtained. Further, when the slurry of the mixed ion exchange resins is charged, there is a possibility that the upper surface of the anion exchange resin bed, which has been formed at the lower position in the demineralization vessel, is disturbed, the thickness of the anion exchange resin bed becomes non-uniform, and the removability of PSS may deteriorate at a position small in thickness of bed.

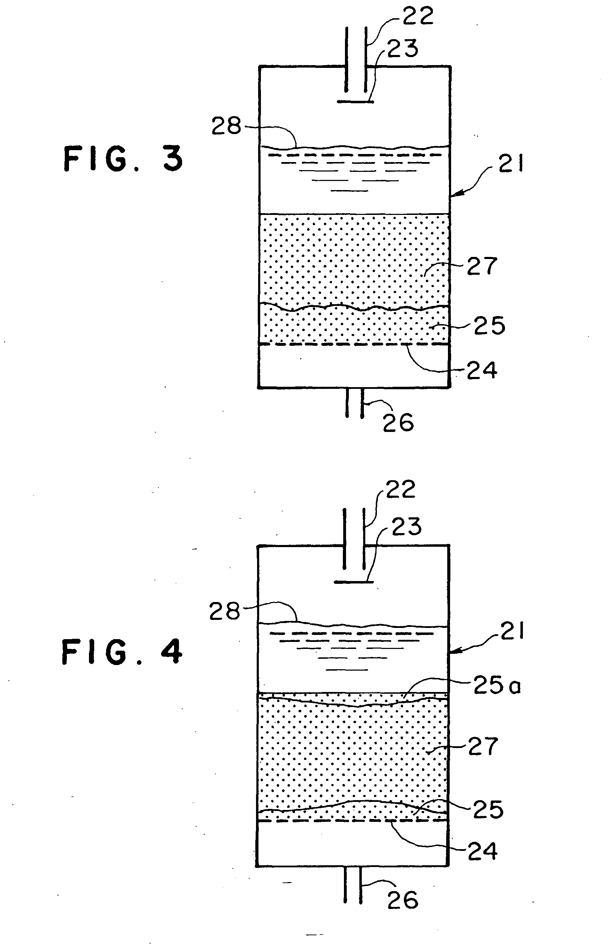

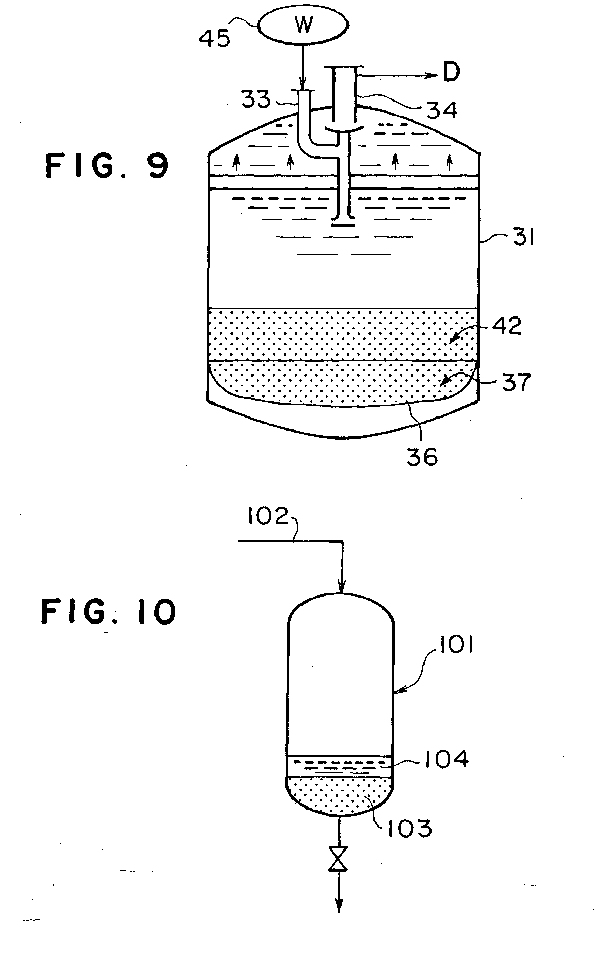

Such a phenomenon occurs, for example, as shown in Fig. 10. As shown in Fig. 10, when ion exchange resins are charged into a demineralization vessel 101, a slurry of an anion exchange resin and water is first supplied from a resin transfer pipe 102 into the demineralization vessel 101, and an anion exchange resin bed 103 is formed at the bottom portion in the vessel. At this juncture, because the transferred water as well as the anion exchange resin is stored in the vessel, a water layer 104 is formed on the resin bed 103 after the transfer of the anion exchange resin is finished as shown in the figure. Next, although a slurry of the mixed resins of cation and anion exchange resins and water is supplied from the resin transfer pipe 102 into the demineralization vessel 101 to form a mixed resin bed on the anion exchange resin bed 103, at this juncture, because the water flow of the slurry introduced from an upper part of the vessel strikes the water layer 104, a part of the anion exchange resin flows up, and it moves into a mixed resin bed being formed or up to the upper portion of the mixed resin bed. As a result, the amount of the anion exchange resin present at the lower portion in the vessel decreases, and for example, a state shown in Fig. 4 and described later may be created. If the amount of the anion exchange resin at the lower portion in the vessel decreases, as described above, an aimed effect for reducing the PSS concentration in the treated water may not be obtained.

Although an adjustment of resin particle diameter, that is, a method for using an anion exchange resin having a large particle diameter or a cation exchange resin having a small particle diameter is considered in order to suppress the above-described movement of anion exchange resin, if such a method is employed, when the resin is regenerated, it becomes difficult to properly separate resins in a regeneration unit which is usually designed to separate a cation exchange resin with a larger specific gravity to a lower position and separate an anion exchange resin with a smaller specific gravity to an upper position. If the resins cannot be separated, there occur problems such as a problem that it becomes difficult to re-charge resins after the resins are drawn out from a demineralization vessel at the time of a regular inspection except a problem that chemical regeneration becomes impossible. Therefore, such an adjustment of resin particle diameter cannot be employed in practice.

Further, for the aforementioned problem, an improved structure is proposed wherein a fluidization of an anion exchange resin bed is suppressed by providing a trail wall at a lower portion in a demineralization vessel (JP-A-2000-167551). However, although such a structure of providing a trail wall can be employed for a new plant relatively with no problem, in connection of an improvement of an existing plant, particularly for an improvement associated with a welding work or a lining repairing within a radiation controlled area in a boiling water reactor type nuclear power plant (BWR plant), the structure is fairly difficult to be employed in practice.

Furthermore, a method for charging mixed cation exchange resins and anion exchange resins into a demineralization vessel to form a single mixed resin bed, while suppressing separation of the mixed resin into cation exchange resin and anion exchange has also been proposed (JP-A-2002-1328). The method comprises charging the mixed resins into a demineralization vessel while simultaneously draining the transfer water, so as to prevent separation of anion exchange resin and cation exchange resin due to a difference in sinking speed between the resins in the transfer water when the single bed of the mixed resins is formed. However, because this method is described for a case where only one kind of mixed resin bed is formed, it cannot be applied as it is, to a case where two stratified ion exchange resin beds different from each other are to be formed.

Accordingly, it would be desirable to provide a method for charging ion exchange resins into a demineralization vessel of a condensate demineralizer, which can suppress flowing up of anion exchange resin from a resin bed formed at a lower position in the demineralization vessel, and which can surely form a desirable formation of two ion exchange resin beds in the vessel, thereby obtaining a desirable effect for reducing PSS concentration in treated water.

Further, it would be desirable to provide a method for charging ion exchange resins into a demineralization vessel of a condensate demineralizer, which, in a case where stratified two ion exchange resin beds different from each other are formed in the demineralization vessel, particularly can charge an upper-side ion exchange resin into the vessel while forming a lower-side ion exchange resin bed in a desirable formation, and which can surely form a desirable formation of two ion exchange resin beds in the vessel, thereby obtaining a desirable effect for reducing PSS concentration in treated water.

A method for charging ion exchange resins into a condensate demineralizer according to the present invention forms stratified two ion exchange resin beds different from each other in a demineralization vessel. The two ion exchange resin beds different from each other are formed as an upper-side ion exchange resin bed formed by mixed resins A of a cation exchange resin and an anion exchange resin and a lower-side ion exchange resin bed formed by an anion exchange resin only or mixed resins B whose ratio of an anion exchange resin is higher than that of the mixed resins A. The method comprises the steps of forming the lower-side ion exchange resin bed by charging the anion exchange resin or the mixed resins B together with transfer water into the demineralization vessel; draining water from the demineralization vessel; and forming the upper-side ion exchange resin bed on the lower-side ion exchange resin bed by charging the mixed resins A together with transfer water into the demineralization vessel. This method is referred to as a first method according to the present invention.

In this first method, further, after the upper-side ion exchange resin bed is formed, the inside of the demineralization vessel can be filled with water, and the inside of the demineralization vessel can be pressurized. The pressurization may be done by any of a method for supplying pressurized water when water filling and maintaining a supply valve of the pressurized water to be opened as it is even after water filling and a method for pressurizing by supplying a pressurized water after filling water in the vessel. The pressure of the pressurization may be about a pressure of making-up water or condensate of a power plant, for example, a pressure in the range of 0.3 to 0.8 MPa is appropriate. By keeping the pressurized condition in the demineralization vessel for a certain period of time, it becomes possible to dissolve bubbles in water even if bubbles are present in the ion exchange resin beds formed in the vessel. Further, the bubbles in the vessel can be effectively removed by replacing the water in the vessel with new water after the pressurization for a certain period of time and thereafter pressurizing the replaced water again. Where, as water for transferring ion exchange resins into the demineralization vessel or water for filling the vessel after the transferring, preferably a degasified water such as one described later is used from the viewpoint of its strong property for dissolving gas, and for example, a degasified purified water or a condensate can be used.

Further, in the above-described first method, after the upper-side ion exchange resin bed is formed, bubbles in the demineralization vessel can also be removed by continuously supplying degasified water, from which dissolved gas such as dissolved oxygen and dissolved nitrogen has been removed in advance, into the vessel, in other words, by feeding degasified water into the inside of the demineralization vessel. The degasified water may be either pressurized water or non-pressurized water. By replacing with the degasified water, it becomes possible to dissolve bubbles in water even if bubbles are present in the ion exchange resin beds, and to prepare the condition for starting the demineralization treatment.

In order to drain the water in the demineralization vessel after forming the lower-side ion exchange resin bed, although a method for draining the water merely by utilizing a vertically positional difference may be employed, a method for forcibly draining the water by introducing air or a gas such as nitrogen gas from an upper part of the demineralization vessel may also be employed. In the forcible draining, the water in the vessel can be drawn out more quickly.

Further, the present invention provides another method for charging ion exchange resins into a condensate demineralizer. In this method, stratified two ion exchange resin beds also are formed in a demineralization vessel. The two stratified ion exchange resin beds are formed as an upper-side ion exchange resin bed formed by mixed resins A of a cation exchange resin and an anion exchange resin and a lower-side ion exchange resin bed formed by an anion exchange resin only or mixed resins B whose ratio of an anion exchange resin is higher than that of the mixed resins A. The method comprises the steps of forming the lower-side ion exchange resin bed by charging the anion exchange resin or the mixed resins B together with transfer water into the demineralization vessel; making up water into the demineralization vessel to elevate a water level in the demineralization vessel and to attain a water depth relative to an upper surface of the lower-side ion exchange resin bed; and forming the upper-side ion exchange resin bed on the lower-side ion exchange resin bed by charging the mixed resins A together with transfer water into the demineralization vessel, while forming a down flow in the demineralization vessel by draining water from the demineralization vessel. This method is referred to as a second method according to the present invention. The above-described water depth is given preferably so as to have a height of at least 200 mm, preferably 300 mm or more, from the upper surface of the lower-side ion exchange resin bed. Further, in this second method, even if the inside of the demineralization vessel is filled with water as the result of attaining the water depth relative to the upper surface of the lower-side ion exchange resin bed as described above, there occurs no problem, and such an embodiment is also included within the scope of the present invention.

In this second method, the above-described water make-up either can be carried out from a lower part side of the demineralization vessel or can be carried out from an upper part side of the demineralization vessel. In a case where water is made up from the lower part side, an effect for flattening the upper surface of the already formed lower-side ion exchange resin bed by slightly fluidizing the bed can be expected. This embodiment for water make-up is suitable particularly for a case where the lower-side ion exchange resin bed is formed by anion exchange resin only, and in this case, even if the lower-side ion exchange resin bed is slightly fluidized, separation in the bed does not occur. On the other hand, water make-up from the upper part side is suitable particularly for a case where the lower-side ion exchange resin bed is formed by the mixed resins B which are anion exchange resin-rich, and in this case, the lower-side ion exchange resin bed basically does not become a fluidized condition because of water make-up from the upper side, separation in the bed into cation and anion exchange resins can be suppressed. However, for this case, the water make-up is preferably carried out so as not to greatly disturb the upper surface of the already formed lower-side ion exchange resin bed.

Further, after the above-described water make-up, it is preferred that a short-time water make-up (a momentary water make-up) is carried out from a lower part side of the demineralization vessel to bring about a momentary fluidization in the lower-side ion exchange resin bed and to flatten the upper surface of the lower-side ion exchange resin bed. By this, it becomes possible to form the upper surface of the lower-side ion exchange resin bed as flat as possible, before receiving the mixed resins A.

Moreover, also after the above-described charge of the mixed resins A, a short-time water make-up can be carried out from a lower part side of the demineralization vessel to bring about a momentary fluidization in the upper-side ion exchange resin bed and to flatten an upper surface of the upper-side ion exchange resin bed. By this, it becomes possible to form the upper surface of the whole of the ion exchange resin beds finally charged into the demineralization vessel as flat as possible.

In the above-described first method according to the present invention, the anion exchange resin or the anion exchange resin-rich mixed resins B are first supplied to and charged into the demineralization vessel together with the transfer water, and the lower-side ion exchange resin bed is formed at the lower portion in the demineralization vessel. Although mixed resins A are succeedingly supplied to and charged into the demineralization vessel together with transfer water in a conventional method, in this first method, next, the water present in the demineralization vessel is drawn out (drained). In this state where the water in the demineralization vessel is drained, the anion exchange resin of the lower-side ion exchange resin bed formed in the demineralization vessel becomes substantially impossible to be fluidized. In this condition, the mixed resins A of cation exchange resin and anion exchange resin are supplied to and charged into the vessel onto the lower-side ion exchange resin bed in the vessel together with transfer water. Therefore, at the time of this charge, the lower-side ion exchange resin bed is prevented from being fluidized, the anion exchange resin is prevented from being flown up, and the anion exchange resin remains at the lower portion in the demineralization vessel. Although the water level in the demineralization vessel gradually elevates because the transfer water also flows into the vessel when the mixed resins A are supplied into the vessel, since a preferred mixed resin bed can be already formed on the lower-side ion exchange resin bed when the water level reaches the upper surface of the lower-side ion exchange resin bed, the anion exchange resin of the lower-side ion exchange resin bed can be properly prevented from being flown up and from moving to an upper side. As a result, the lower-side ion exchange resin bed formed by anion exchange resin or mixed resins B and the upper-side ion exchange resin bed formed by mixed resins A are both formed as beds having desired formations, aimed stratified two-bed formation can be surely formed, and it becomes possible to obtain the effect for reducing PSS concentration in treated water that is aimed in the present invention.

Thus, according to the first method, an undesirable movement of the anion exchange resin from the resin bed formed at the lower portion in the demineralization vessel toward an upper portion in the vessel can be suppressed, and ion exchange resin beds with a stratified two-bed formation and each having a target height can be surely formed in the demineralization vessel. Consequently, at the time of demineralization treatment, PSS eluted from the cation exchange resin of the upper-side ion exchange resin bed can be adsorbed by the anion exchange resin of the lower-side ion exchange resin bed more properly, and an aimed effect for reducing PSS concentration in the treated water can be obtained.

Further, in the above-described second method according to the present invention, after the anion exchange resin or the mixed resins B are charged into the demineralization vessel together with transfer water and the lower-side ion exchange resin bed is formed in the vessel, the water level in the vessel is elevated by making up water into the vessel, and a water depth having a predetermined depth or more is attained relative to the upper surface of the lower-side ion exchange resin bed. Namely, an amount of water enough to drain the water from the demineralization vessel is ensured in the vessel. From this state, a down flow is formed in the demineralization vessel by draining water from the vessel, and while the down flow is formed, namely, at a condition where the down flow is being formed, the mixed resins A is charged together with transfer water, the upper-side ion exchange resin bed is formed on the lower-side ion exchange resin bed. By forming the down flow and continuing the state, a force for pressing the already formed lower-side ion exchange resin bed in the downward direction is continuously applied to the resin bed, and even during charge of the mixed resins A into the upper portion of the vessel, the lower-side ion exchange resin bed is continuously maintained in a desired form. As a result, particularly without a great disturbance of the upper surface of the lower-side ion exchange resin bed, the aimed formation of stratified two ion exchange resin beds can be realized in the demineralization vessel.

Further, by attaining the water depth having a predetermined value or more relative to the upper surface of the lower-side ion exchange resin bed, when the mixed resins A are charged together with transfer water, the water layer present on the upper surface of the lower-side ion exchange resin bed functions as a buffer layer, and the disturbance of the upper surface of the lower-side ion exchange resin bed, ascribed to flown-in mixed resins A or its transfer water, can be minimized. By this, the aimed formation of stratified two ion exchange resin beds can be formed more surely.

Thus, according to the second method, the upper-side ion exchange resin bed can be formed while the lower-side ion exchange resin bed can be maintained in a desired formation in the demineralization vessel, and the stratified two ion exchange resin beds can be both formed in aimed desired formations. This second method can be easily carried out without accompanying a significant change in the system even for an existing demineralization vessel. By using this second method, it is possible to obtain an excellent effect for reducing PSS concentration in the treated water.

Embodiments of the invention are now described with reference to the accompanying figures, which are given by way of example only, and are not intended to limit the present invention.

Fig. 1 is a schematic vertical sectional view, showing an example of a demineralization vessel capable of being used with a method according to the present invention.

Fig. 2 is a schematic vertical sectional view, showing another example of a demineralization vessel capable of being used with a method according to the present invention.

Fig. 3 is a schematic vertical sectional view of an experimental apparatus, showing a result of an experiment (Example 1) carried out for confirming an effect due to a first method according to the present invention.

Fig. 4 is a schematic vertical sectional view of an experimental apparatus, showing a result of an experiment (Comparative Example 1) carried out for comparing the present invention with a conventional method.

Fig. 5 is a schematic vertical sectional view of a demineralization vessel, showing a step in an embodiment according to a second method of the present invention.

Fig. 6 is a schematic vertical sectional view of the demineralization vessel, showing a next step in the embodiment depicted in Fig. 5.

Fig. 7 is a schematic vertical sectional view of the demineralization vessel, showing a next step in the embodiment depicted in Fig. 6.

Fig. 8 is a schematic vertical sectional view of the demineralization vessel, showing a next step in the embodiment depicted in Fig. 7.

Fig. 9 is a schematic vertical sectional view of the demineralization vessel, showing a next step in the embodiment depicted in Fig. 8.

Fig. 10 is a schematic vertical sectional view of a demineralization vessel for explaining problems in a conventional method.

First, a first method according to the present invention will be explained in detail together with an example carried out as an experiment for confirming the effect with reference to the drawings.

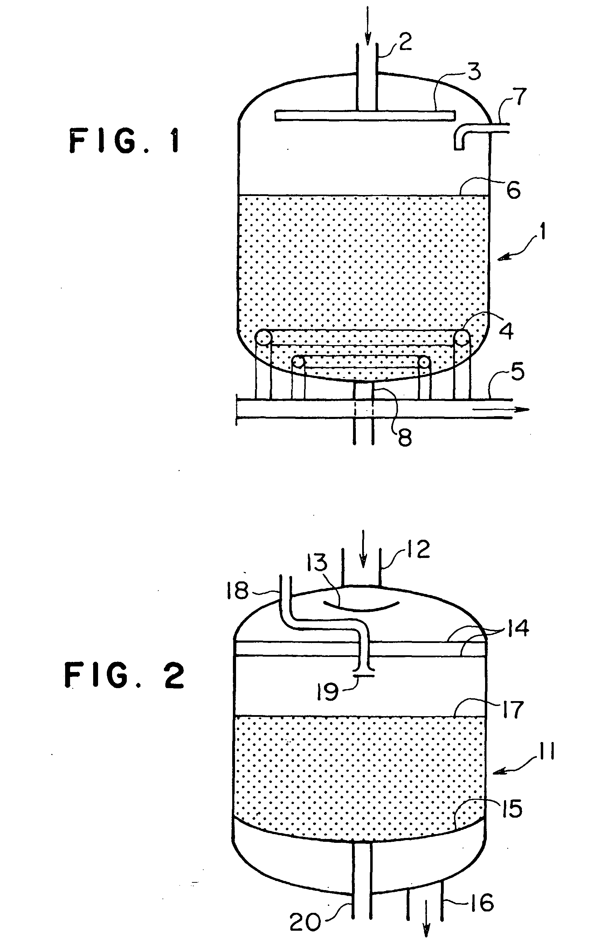

The first method according to the present invention relates to a method for charging ion exchange resins into a demineralization vessel provided in a condensate demineralizer, and the formation of the demineralization vessel to which this method can be applied is not particularly restricted, for example, the method can be applied to any of demineralization vessels shown in Figs. 1 and 2. In a demineralization vessel 1 depicted in Fig. 1, a resin inlet pipe 7 for supplying ion exchange resin is provided on its upper-side part. Further, a water inlet pipe 2 is provided on the upper part of demineralization vessel 1, and a distributor 3 is provided at the tip of the inlet pipe. A water collector 4 is provided at the lower portion in demineralization vessel 1, and the water collector 4 is connected to a water outlet pipe 5. Ion exchange resins are supplied into demineralization vessel 1 together with transfer water, and the ion exchange resins are charged into the vessel up to a desired resin level 6. In the first method according to the present invention, in demineralization vessel 1, stratified two ion exchange resin beds of an upper-side ion exchange resin bed formed by mixed resins A of a cation exchange resin and an anion exchange resin and a lower-side ion exchange resin bed formed by an anion exchange resin only or mixed resins B whose ratio of an anion exchange resin is higher than that of the mixed resins A, are formed. In Fig. 1, the numeral 8 indicates a resin outlet pipe used, for example, when the ion exchange resins in demineralization vessel 1 are transferred to a regeneration unit which is not shown.

In a demineralization vessel 11 depicted in Fig. 2, a resin inlet pipe 18 for supplying ion exchange resins is provided on its upper-side part. Resin inlet pipe 18 extends through rectifying plates 14 described later down to a position below the rectifier plates 14, and a baffle plate 19 is provided below the tip of the resin inlet pipe 18. Further, a water inlet pipe 12 is connected to the upper part of demineralization vessel 11, a baffle plate 13 is provided in the vessel at a position below the water inlet pipe 12, and rectifying plates 14 are provided below the baffle plate 13 so as to extend across the inside of the vessel. A screen 15 is provided at a lower portion in demineralization vessel 11, and a water outlet pipe 16 is connected to the bottom of the demineralization vessel 11. Ion exchange resins are supplied into demineralization vessel 11 together with transfer water, and the ion exchange resins are placed over screen 15 in the vessel up to a desired resin level 17. In the first method according to the present invention, in demineralization vessel 11, stratified two ion exchange resin beds of an upper-side ion exchange resin bed formed by mixed resins A of a cation exchange resin and an anion exchange resin and a lower-side ion exchange resin bed formed by an anion exchange resin only or mixed resins B whose ratio of an anion exchange resin is higher than that of the mixed resins A, are formed. In Fig. 2, the numeral 20 indicates a resin outlet pipe.

The above-described lower-side ion exchange resin bed and upper-side ion exchange resin bed are formed as follows. First, anion exchange resin or mixed resins B are supplied into demineralization vessel 1 or 11 together with transfer water through resin inlet 7 or 18, and the resin(s) is charged into a lower portion in the vessel to form the lower-side ion exchange resin bed. After forming the lower-side ion exchange resin bed, the water stored in demineralization vessel 1 or 11 is drawn out (drained) from the vessel. By this draining, the lower-side ion exchange resin bed becomes a state substantially impossible to fluidize. Then, at this state, mixed resins A are supplied into demineralization vessel 1 or 11 together with transfer water through resin inlet 7 or 18, and the resin is charged into the vessel to form the upper-side ion exchange resin bed on the lower-side ion exchange resin bed. At the time of forming this upper-side ion exchange resin bed, although the water used for transferring the mixed resins A is gradually stored in demineralization vessel 1 or 11 and the water level gradually elevates, because the bed of the mixed resins A is already formed on the lower-side ion exchange resin bed at the time when the water level reaches the upper surface of the lower-side ion exchange resin bed, the fluidization of the lower-side ion exchange resin bed, and the flowing up of the anion exchange resin in the lower-side ion exchange resin bed and the movement of the anion exchange resin upward accompanied with the fluidization, can be prevented. Therefore, the lower-side ion exchange resin bed formed by the anion exchange resin or the mixed resins B remains in the bed formation substantially as it is, the upward movement of the anion exchange resin in the lower-side ion exchange resin bed, particularly, the movement up to an upper portion of the upper-side ion exchange resin bed, can be prevented. Even if the bed formation of the lower-side ion exchange resin bed is disturbed, at highest, it is suppressed within a degree at which the surface formation of the lower-side ion exchange resin bed (the boundary formation with the upper-side ion exchange resin bed) is disturbed.

As a result, a lower-side ion exchange resin bed having a desired height and an upper-side ion exchange resin bed having a desired height are surely formed, respectively, and an aimed stratified two-bed formation in the vessel can be realized. By this two-bed formation, at the time of demineralization treatment, PSS eluted from the cation exchange resin in the upper-side ion exchange resin bed can be properly trapped by the anion exchange resin in the lower-side ion exchange resin bed, and it becomes possible to obtain a desirable effect for reducing PSS concentration in the treated water.

When the demineralization treatment is actually started, as aforementioned, it is preferred that the demineralization treatment is started after bubbles are dissolved in water even if bubbles exist in the ion exchange resin beds, by a method wherein, after the upper-side ion exchange resin bed is formed, the inside of the demineralization vessel is filled with water, and the inside of the demineralization vessel is pressurized for a certain period of time, or by a method wherein, after the upper-side ion exchange resin bed is formed, a degasified water is continuously supplied into the vessel to replace the water present in the vessel with the degasified water.

The following experiment was carried out as Example 1 for confirming the effect for preventing the anion exchange resin in the lower-side ion exchange resin bed from moving upward by the first method according to the present invention.

### Example 1:

A demineralization vessel was made of a transparent material as an experimental apparatus so as to be able to observe a state of ion exchange resin beds formed in the vessel, and the transfer and charge state of ion exchange resins was determined using the apparatus.

The summary of the experimental apparatus and conditions is shown below.
· Inner diameter of demineralization vessel: 500 mm
· Inner diameter of resin transfer pipe: 10 mm
· Flow rate of transfer: 40 L/h
· Lower-side ion exchange resin bed: strong basic anion exchange resin, "AMBERLITE" (registered trademark) IRA400T, 9 L
• Upper-side ion exchange resin bed: mixed resins of (1) cation exchange resin and (2) anion exchange resin;
   (1) Strong acidic cation exchange resin: "AMBERLITE" 200C, 7.5 L
   (2) Strong basic anion exchange resin: "AMBERLITE" IRA400T, 7.5 L

The transfer and charge state in Example 1 based on the first method according to the present invention is shown in Fig. 3. Anion exchange resin was supplied together with transfer water into a transparent demineralization vessel 21 via a resin transfer pipe 22 and a baffle plate 23 to form an anion exchange resin bed 25 as a lower-side ion exchange resin bed on a perforated plate 24 provided at a lower position in the vessel, and then, water present in the vessel was drawn out through an outlet pipe 26, and thereafter, mixed resins of cation exchange resin and anion exchange resin were supplied together with transfer water to form a mixed ion exchange resin bed 27 as an upper-side ion exchange resin bed on the anion exchange resin bed 25. At this juncture, as shown in Fig. 3, although water level 28 in the vessel due to transfer water reached a position above mixed ion exchange resin bed 27, anion exchange resin bed 25 present at a lower position in the vessel was held substantially at a predetermined height as it was in the lower portion in the vessel though its boundary surface was not flat.

### Comparative Example 1:

As Comparative Example 1, a transfer state according to a conventional method is shown in Fig. 4. Namely, after anion exchange resin bed 25 was formed, without drawing out water in the vessel, the mixed resins were supplied together with transfer water, and whereby mixed ion exchange resin bed 27 as an upper-side ion exchange resin bed was tried to be formed on the anion exchange resin bed 25. As a result, as shown in Fig. 4, most of the anion exchange resin in anion exchange resin bed 25, which had been formed at the lower position in the vessel, moved upward, and a part thereof moved up to the upper portion of mixed ion exchange resin bed 27 and an upper-side anion exchange resin bed 25a was formed.

From the comparison experiments shown in Figs. 3 and 4, a remarkable effect due to water draining after forming a lower-side ion exchange resin bed, according to the first method of the present invention, was confirmed.

Next, a preferred embodiment of the second method according to the present invention will be explained referring to the drawings.

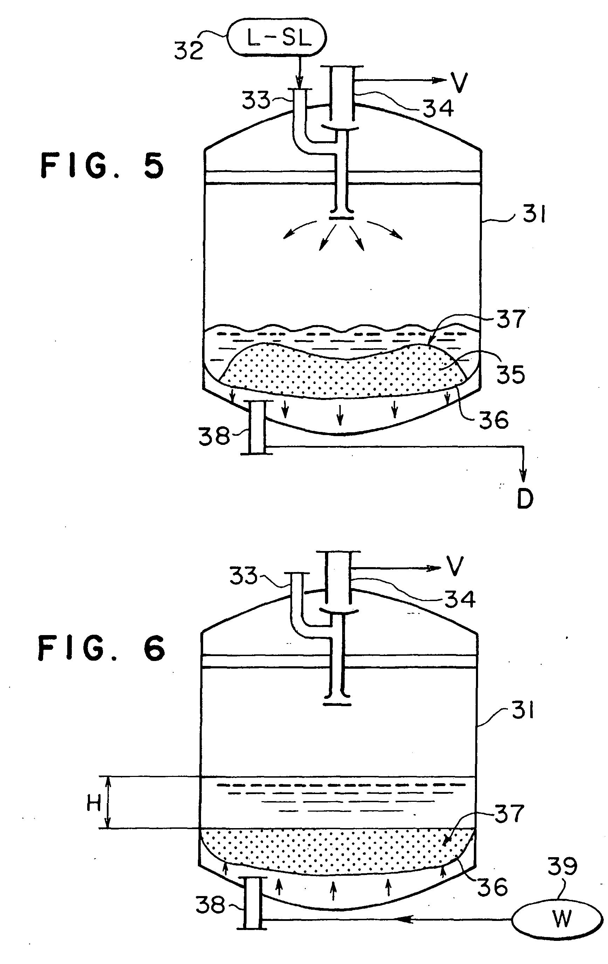

Figs. 5 to 9 show a case where an embodiment of the second method for charging ion exchange resins into a demineralization vessel according to the present invention was applied to a vertical-type cylindrical demineralization vessel in a BWR plant, and show the method in the order of charging resins. Fig. 5 shows an aspect wherein anion exchange resin or mixed resins B (mixed resins whose ratio of anion exchange resin is higher than that of mixed resins A forming an upper-side ion exchange resin bed) are sent from a regeneration vessel, etc. into the demineralization vessel together with transfer water and the anion exchange resin or the mixed resins B are charged into the demineralization vessel to form a lower-side ion exchange resin bed. On the upper part of a demineralization vessel 31, a resin transfer pipe 33 for introducing an lower-side ion exchange resin slurry (L-SL) 32 (mixed form of lower-side ion exchange resin and transfer water) into the demineralization vessel 31 and a vent pipe are provided (vent: V). Lower-side ion exchange resin 35 transferred through resin transfer pipe 33 is charged into demineralization vessel 31 and forms a lower-side ion exchange resin bed 37 on a perforated plate 36 provided at the lower position in the demineralization vessel 31 in this embodiment. At this juncture, as needed, an excessive amount of transfer water may be drawn out (drained) via a drain pipe 38 provided at a lower part of demineralization vessel 31 (drain: D). When the transfer of lower-side ion exchange resin slurry 32 is completed, usually, as shown in Fig. 5, the upper surface of lower-side ion exchange resin bed 37 is not flat and the surface is frequently formed to be nonuniform.

Next, as shown in Fig. 6, make-up water (W) 39 is supplied into demineralization vessel 31 from the lower part of the vessel, for example, utilizing drain pipe 38, the water level in the vessel is elevated, and a predetermined water depth H relative to the upper surface of lower-side ion exchange resin bed 37 is attained. This water depth H is given as a depth of at least 200 mm, preferably 300 mm or more. Further, since lower-side ion exchange resin bed 37 is slightly fluidized by the water make-up from the lower part of demineralization vessel 31, there is an effect for flattening the upper surface of lower-side ion exchange resin bed 37. Moreover, in order to further flatten the upper surface, for example, a method may be employed wherein, after water is made up so as to attain the above-described predetermined water depth H, water is supplied momentarily at a higher flow rate (a short-time water make-up is carried out), and lower-side ion exchange resin bed 37 is fluidized momentarily, thereby flattening its upper surface,

Further, although a figure is omitted, the make-up water for attaining the above-described water depth H may be supplied from an upper part of demineralization vessel 31. Although there is an effect for flattening the upper surface of lower-side ion exchange resin bed 37 by momentary fluidization of the bed in the above-described water supply from the lower part of demineralization vessel 31, in a case where lower-side ion exchange resin 35 for forming the lower-side ion exchange resin bed 37 is charged as mixed resins B, because there is a fear that cation exchange resin and anion exchange resin in the bed are separated and classified, this water supply from the lower part of the vessel is effective especially for a case where the lower-side ion exchange resin bed 37 is formed by anion exchange resin only. On the other hand, in the water supply from the upper part of demineralization vessel 31, because such a separation in lower-side ion exchange resin bed 37 as in the water supply from the lower part of the vessel does not occur, this water supply from the upper part is effective especially for a case where the lower-side ion exchange resin bed 37 is formed by mixed resins B.

After lower-side ion exchange resin bed 37 is formed and a predetermined water depth H is attained as described above, while a down flow R is formed in the water present in demineralization vessel 31 by drawing out the water in the vessel though drain pipe 38 at the lower part of the vessel, an upper-side ion exchange resin slurry (U-SL) 40 (mixed form of upper-side ion exchange resin (mixed resins A) and transfer water) is supplied into the demineralization vessel 31 via resin transfer pipe 33 from a regeneration vessel, etc. Upper-side ion exchange resin 41 (mixed resins A) transferred into demineralization vessel 31 is placed over lower-side ion exchange resin bed 37 already formed in the vessel, and forms an upper-side ion exchange resin bed 42. At this juncture, because the state formed with down flow R is kept, a force for pressing already formed lower-side ion exchange resin bed 37 downward is continuously applied to the lower-side ion exchange resin bed 37, and even during the time when upper-side ion exchange resin 41 is placed thereabove, the lower-side ion exchange resin bed 37 is maintained at a desired form. Further, Since the water layer having a water depth exists on lower-side ion exchange resin bed 37, even when upper-side ion exchange resin 41 and transfer water thereof are powerfully dropped in the vessel, the water layer functions to damp the powerfulness. Therefore, also from this point of view, the disturbance of the upper surface of lower-side ion exchange resin bed 37 may be suppressed, and the lower-side ion exchange resin bed 37 may maintained at a desired form.

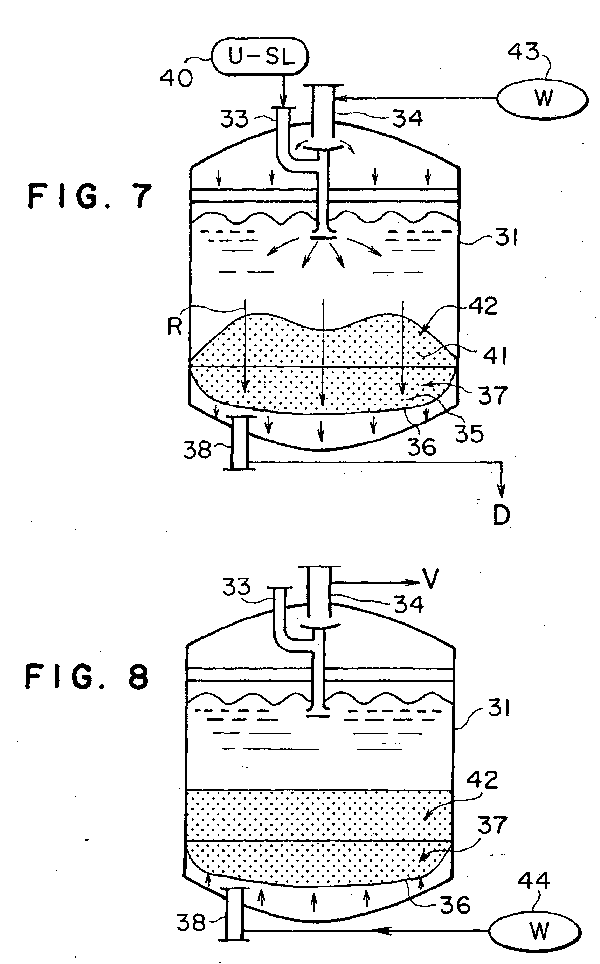

Further, in this step where upper-side ion exchange resin bed 42 is being formed while down flow R is being formed, at the same time make-up water (W) 43 may be supplied from the upper side of demineralization vessel 31, for example, via vent pipe 34, as shown in Fig. 7. By this make-up of water 34, the water attaining the above-described water depth H in demineralization vessel 31 can be ensured sufficiently in amount, and the water depth may be prevented from being reduced too much even if the flow rate of down flow R is increased. Therefore, the above-described function for maintaining lower-side ion exchange resin bed 37 at a desired form can be kept. It is possible to supply pressurized air, instead of this make-up water 43 or together with the make-up water 43. By supplying pressurized air, the operation for pressing lower-side ion exchange resin bed 37 downward and maintaining the form thereof may be reinforced.

Further, since the above-described step for forming upper-side ion exchange resin bed 42 is carried out at a state where down flow R is formed, separation in upper-side ion exchange resin 41, that is, mixed resins A (separation between cation exchange resin and anion exchange resin) may also be suppressed, and the upper-side ion exchange resin bed 42 may be formed as a desirable mixed condition is kept.

After upper-side ion exchange resin bed 42 is thus formed, there may be a slight possibility that a small disturbance remains on the upper surface of the bed. In such a case, a method can be employed, as shown in Fig. 8 for example, wherein make-up water (W) 44 is momentarily supplied from the lower part of demineralization vessel 31 (a short-time water make-up is carried out), and upper-side ion exchange resin bed 42 is momentarily fluidized, thereby flattening the upper surface thereof. However, if this operation is unnecessary, it may be omitted.

After stratified two ion exchange resin beds of lower-side ion exchange resin bed 37 and upper-side ion exchange resin bed 42 with desired forms to be aimed are formed in demineralization vessel 31 as described above, as shown in Fig. 9, make-up water (W) 45 is supplied from the upper-side part of the vessel, an excessive amount of water is drained (D) from vent pipe 34, the inside of the vessel is filled with water, and thus the preparation for service cycle (water feeding) is completed.

Although the above-described embodiment is explained with respect to a case where the second method according to the present invention is applied to a vertical-type cylindrical demineralization vessel in a BWR plant, the second method according to the present invention can also be applied, for example, to a spherical demineralization vessel in a BWR plant, and further, can be applied similarly to a demineralization vessel provided with a resin inlet on its side wall. In a case where a resin inlet is provided on a side wall of a demineralization vessel, although the upper surface of a resin bed formed in the vessel tends to become high at a position near the resin inlet, it is possible to appropriately flatten the upper surface by the aforementioned down flow or/and momentarily supplied make-up water.

## Claims

1. A method for charging ion exchange resins into a condensate demineralizer to form, in a demineralization vessel, stratified two ion exchange resin beds of an upper-side ion exchange resin bed formed by mixed resins A of a cation exchange resin and an anion exchange resin and a lower-side ion exchange resin bed formed by an anion exchange resin only or mixed resins B whose ratio of an anion exchange resin is higher than that of said mixed resins A, said method comprising the steps of:
forming said lower-side ion exchange resin bed by charging said anion exchange resin or said mixed resins B together with transfer water into said demineralization vessel;
draining water from said demineralization vessel; and
forming said upper-side ion exchange resin bed on said lower-side ion exchange resin bed by charging said mixed resins A together with transfer water into said demineralization vessel.

2. The method for charging ion exchange resins into a condensate demineralizer according to claim 1, wherein the inside of said demineralization vessel is filled with water after said upper-side ion exchange resin bed is formed, and the inside of said demineralization vessel is pressurized.

3. The method for charging ion exchange resins into a condensate demineralizer according to claim 1, wherein water in said demineralization vessel is replaced with degasified water after said upper-side ion exchange resin bed is formed.

4. A method for charging ion exchange resins into a condensate demineralizer to form, in a demineralization vessel, stratified two ion exchange resin beds of an upper-side ion exchange resin bed formed by mixed resins A of a cation exchange resin and an anion exchange resin and a lower-side ion exchange resin bed formed by an anion exchange resin only or mixed resins B whose ratio of an anion exchange resin is higher than that of said mixed resins A, said method comprising the steps of:
forming said lower-side ion exchange resin bed by charging said anion exchange resin or said mixed resins B together with transfer water into said demineralization vessel;
making up water into said demineralization vessel to elevate a water level in said demineralization vessel and to attain a water depth relative to an upper surface of said lower-side ion exchange resin bed; and
forming said upper-side ion exchange resin bed on said lower-side ion exchange resin bed by charging said mixed resins A together with transfer water into said demineralization vessel, while forming a down flow in said demineralization vessel by draining water from said demineralization vessel.

5. The method for charging ion exchange resins into a condensate demineralizer according to claim 4, wherein said water make-up is carried out from a lower part side of said demineralization vessel.

6. The method for charging ion exchange resins into a condensate demineralizer according to claim 4, wherein said water make-up is carried out from an upper part side of said demineralization vessel.

7. The method for charging ion exchange resins into a condensate demineralizer according to any of claims 4 to 6, wherein, after said water make-up, a short-time water make-up is carried out from a lower part side of said demineralization vessel to give a momentary fluidization to said lower-side ion exchange resin bed and to flatten said upper surface of said lower-side ion exchange resin bed.

8. The method for charging ion exchange resins into a condensate demineralizer according to any of claims 4 to 6, wherein, after charge of said mixed resins A, a short-time water make-up is carried out from a lower part side of said demineralization vessel to give a momentary fluidization to said upper-side ion exchange resin bed and to flatten an upper surface of said upper-side ion exchange resin bed.

## Patentansprüche

1. Verfahren zum Einfüllen eines lonenaustauscherharzes in einen Kondensations-Vollentsalzer zur Ausbildung eines geschichteten, zweilagigen lonenaustauscherharzbetts in einem Demineralisationsgefäß, bestehend aus einer oberen lonenaustauscherharzschicht, die aus einer Harzmischung A, eines Kationen-Austauscherharzes und eines Anionen-Austauscherharzes gebildet wird, und einer untere lonenaustauscherharzschicht, die nur von einem Anionen-Austauscherharz oder von einer Harzmischung B gebildet wird, in welcher der Anteil an Anionen-Austauscherharz größer ist als in der Harzmischung A, wobei das Verfahren folgende Verfahrensschritte umfasst:
Ausbilden der unteren Ionenaustauscherharzschicht durch das Befüllen des Demineralisationsgefäßes mit dem Anionen-Austauscherharz oder der Harzmischung B zusammen mit Wasser für den Transfer;
Ablassen des Wassers aus dem Demineralisationsgefäß;
Ausbilden der oberen lonenaustauscherharzschicht auf der unteren lonenaustauscherharzschicht durch Zufuhr der Harzmischung A zusammen mit Wasser für den Transfer zum Demineralisationsgefäß.

2. Verfahren zum Einfüllen eines lonenaustauscherharzes in einen Kondensations-Vollentsalzer gemäß Anspruch 1, wobei das Innere des Demineralisationsgefäßes mit Wasser aufgefüllt wird, nachdem die obere Ionenaustauscherharzschicht ausgebildet wurde und das Innere des Demineralisationsgefäßes unter Druck gesetzt wird.

3. Verfahren zum Einfüllen eines Ionenaustauscherharzes in einen Kondensations-Vollentsalzer nach Anspruch 1, wobei nach der Ausbildung der oberen lonenaustauscherharzschicht das Wasser im Demineralisationsgefäß durch ausgegastes Wasser ersetzt wird.

4. Verfahren zum Einfüllen eines Ionenaustauscherharzes in einen Kondensations-Vollentsalzer zur Ausbildung eines geschichteten, zweilagigen lonenaustauscherharzbetts in einem Demineralisationsgefäß, bestehend aus einer oberen lonenaustauscherharzschicht, die aus einer Harzmischung A, eines Kationen-Austauscherharzes und eines Anionen-Austauscherharzes gebildet wird, und einer untere lonenaustauscherharzschicht, die nur von einem Anionen-Austauscherharz oder von einer Harzmischung B gebildet wird, in welcher der Anteil an Anionen-Austauscherharz größer ist als in der Harzmischung A, wobei das Verfahren folgende Verfahrensschritte umfasst:
Ausbilden der unteren lonenaustauscherharzschicht durch das Befüllen des Demineralisationsgefäßes mit dem Anionen-Austauscherharz oder der Harzmischung B zusammen mit Wasser für den Transfer;
Ausgleich des Wasserspiegels im Demineralisationsgefäß, um den Wasserspiegel im Demineralisationsgefäß anzuheben und eine bestimmte
Wassertiefe relativ zur Oberseite der unteren Ionenaustauscherharzschicht zu erzielen; und
Ausbilden der oberen lonenaustauscherharzschicht auf der unteren lonenaustauscherharzschicht durch Zufuhr der Harzmischung A zusammen mit Wasser für den Transfer zum Demineralisationsgefäß, wobei gleichzeitig im Demineralisationsgefäß durch das Ablassen des Wassers aus dem Demineralisationsgefäß eine nach unten gerichtete Strömung erzeugt wird.

5. Verfahren zum Einfüllen von lonenaustauschharz in einen Kondensations Vollentsalzer nach Anspruch 4, wobei der Ausgleich des Wasserspiegels von einem unteren Bereich des Demineralisationsgefäßes aus vollzogen wird.

6. Verfahren zum Einfüllen von lonenaustauschharz in einen Kondensations-Vollentsalzer nach Anspruch 4, wobei der Ausgleich des Wasserspiegels von einem oberen Bereich des Demineralisationsgefäßes aus vollzogen wird.

7. Verfahren zum Einfüllen eines lonenaustauscherharzes in eine Kondensations-Vollentsalzer nach wenigstens einem der Ansprüche 4 bis 6, wobei nach dem Ausgleich des Wasserspiegels ein kurzzeitiger Ausgleich des Wasserspiegels von einem unteren Bereich des Demineralisationsgefäßes aus vollzogen wird, um eine kurzzeitige Verflüssigung der unteren lonenaustauscherharzschicht zu vollziehen und um die obere Fläche der unteren lonenaustauschharzschicht zu glätten.

8. Verfahren zum Einfüllen eines Ionenaustauscherharzes in eine Kondensations-Vollentsalzer nach wenigstens einem der Ansprüche 4 bis 6, wobei nach dem Einfüllen der Harzmischung A ein kurzzeitiger Ausgleich des Wasserspiegels vom unteren Bereich des Demineralisationsgefäßes aus vollzogen wird, um eine kurzzeitige Verflüssigung der oberen lonenaustauscherharzschicht zu vollziehen und um die obere Fläche der oberen lonenaustauschharzschicht zu glätten.

## Revendications

1. Procédé pour charger des résines échangeuses d'ions dans un déminéralisateur de condensats pour former, dans un réservoir de déminéralisation, deux lits stratifiés de résines échangeuses d'ions constitués d'un lit de résines échangeuses d'ions supérieur formé par un mélange de résines A constitué d'une résine échangeuse de cations et d'une résine échangeuse d'anions et d'un lit de résines échangeuses d'ions inférieur formé seulement par une résine échangeuse d'anions ou bien par un mélange de résines B dont le rapport de résine échangeuse d'anions est supérieur à celui dudit mélange de résines A, ledit procédé comprenant les étapes consistant à :
former ledit lit de résines échangeuses d'ions inférieur en chargeant ladite résine échangeuse d'anions ou ledit mélange de résines B conjointement avec de l'eau de transfert dans ledit réservoir de déminéralisation ;
évacuer l'eau à partir dudit réservoir de déminéralisation ; et à
former ledit lit de résines échangeuses d'ions supérieur sur ledit lit de résines échangeuses d'ions inférieur en chargeant ledit mélange de résines A conjointement avec l'eau de transfert dans ledit réservoir de déminéralisation.

2. Procédé pour charger les résines échangeuses d'ions dans un déminéralisateur de condensats selon la revendication 1, dans lequel l'intérieur dudit réservoir de déminéralisation est rempli d'eau après que ledit lit de résines échangeuses d'ions supérieur a été formé et l'intérieur dudit réservoir de déminéralisation est sous pression.

3. Procédé pour charger des résines échangeuses d'ions dans un déminéralisateur de condensats selon la revendication 1, dans lequel l'eau dans ledit réservoir de déminéralisation est remplacée par de l'eau dégazéifiée après que ledit lit de résines échangeuses d'ions supérieur a été formé.

4. Procédé pour charger des résines échangeuses d'ions dans un déminéralisateur de condensats pour former, dans un réservoir de déminéralisation, deux lits stratifiés de résines échangeuses d'ions constitués d'un lit de résines échangeuses d'ions supérieur formé par un mélange de résines A constitué d'une résine échangeuse de cations et d'une résine échangeuse d'anions et d'un lit de résines échangeuses d'ions inférieur formé seulement par une résine échangeuse d'anions ou bien par un mélange de résines B dont le rapport de résine échangeuse d'anions est supérieur à celui dudit mélange de résines A, ledit procédé comprenant les étapes consistant à :
former ledit lit de résines échangeuses d'ions inférieur en chargeant ladite résine échangeuse d'anions ou ledit mélange de résines B conjointement avec de l'eau de transfert dans ledit réservoir de déminéralisation ;
ajouter un complément d'eau dans ledit réservoir de déminéralisation pour élever le niveau de l'eau dans ledit réservoir de déminéralisation et pour atteindre une certaine profondeur d'eau par rapport à la surface supérieure dudit lit de résines échangeuses d'ions inférieur ; et à
former ledit lit de résines échangeuses d'ions supérieur sur ledit lit de résines échangeuses d'ions inférieur en chargeant ledit mélange de résines A conjointement avec l'eau de transfert dans ledit réservoir de déminéralisation tout en formant un courant de retour dans ledit réservoir de déminéralisation en évacuant l'eau dudit réservoir de déminéralisation.

5. Procédé pour charger des résines échangeuses d'ions dans un déminéralisateur de condensats selon la revendication 4, dans lequel ledit complément d'eau est effectué depuis une partie du fond dudit réservoir de déminéralisation.

6. Procédé pour charger des résines échangeuses d'ions dans un déminéralisateur de condensats selon la revendication 4, dans lequel ledit complément d'eau est effectué depuis une partie du haut dudit réservoir de déminéralisation.

7. Procédé pour charger des résines échangeuses d'ions dans un déminéralisateur de condensats selon l'une quelconque des revendications 4 à 6, dans lequel, après ledit complément d'eau, on effectue un complément d'eau rapide depuis une partie du fond dudit réservoir de déminéralisation pour conférer une fluidisation momentanée audit lit de résines échangeuses d'ions inférieur et pour aplanir ladite surface supérieure dudit lit de résines échangeuses d'ions inférieur.

8. Procédé pour charger des résines échangeuses d'ions dans un déminéralisateur de condensats selon l'une quelconque des revendications 4 à 6, dans lequel, après avoir chargé ledit mélange de résines A, on effectue un complément d'eau rapide depuis une partie au fond dudit réservoir de déminéralisation pour conférer une fluidisation momentanée audit lit de résines échangeuses d'ions supérieur et pour aplanir la surface supérieure dudit lit de résines échangeuses d'ions supérieur.
